# EUROPÄISCHE PATENTSCHRIFT

(11) **EP 2 983 803 B1**
(45) Veröffentlichungstag und Bekanntmachung des Hinweises auf die Patenterteilung: **11.01.2017**
(21) Anmeldenummer: 14710904.5
(22) Anmeldetag: 19.03.2014
(51) Int. Cl.: C02F 9/00, C02F 101/12, C01B 33/107, C02F 1/04, C02F 1/66, B01D 1/00, C02F 1/38

(54) **VORRICHTUNG UND VERFAHREN ZUR BEHANDLUNG VON CHLORSILANE ENTHALTENDEN FLÜSSIGKEITEN**
APPARATUS AND PROCESS FOR TREATING LIQUIDS CONTAING CHLOROSILANES
DISPOSITIF ET PROCÉDÉ DE TRAITEMENT DE LIQUIDES CONTENANT DES CHLOROSILANES

(30) Priorität: 09.04.2013 DE 102013206228
(43) Veröffentlichungstag der Anmeldung: 17.02.2016
(73) Patentinhaber: Wacker Chemie AG, 81737 München (DE)
(72) Erfinder: LIEBISCHER, Sebastian, 84453 Mühldorf (DE); BRÄUNLING, Daniel, 80807 München (DE); GAESS, Daniel, 84489 Burghausen (DE); THOMPSON, Jeffery, Grandview, Tennessee 37337 (US)
(74) Vertreter: Potten, Holger
(86) Internationale Anmeldenummer: PCT/EP2014/055471
(87) Internationale Veröffentlichungsnummer: WO 2014/166710

(56) Entgegenhaltungen:
- EP-A1- 0 527 309
- EP-A1- 1 112 958
- CN-U- 202 226 742
- DE-A1- 3 709 630
- GB-A- 994 076
- US-B2- 7 611 684

## Beschreibung

Die Erfindung betrifft eine Vorrichtung und ein Verfahren zur Behandlung von Chlorsilane enthaltenden Flüssigkeiten.

Im Stand der Technik sind bereits einige solcher Verfahren und Vorrichtungen, insbesondere Wäschersysteme bekannt.

US 6030591 A offenbart ein Verfahren, um Halogenkohlenwasserstoffe aus Prozessaustragsströmen zu entfernen und rückzugewinnen.

Halogenkohlenwasserstoffe bestehen aus vollfluorierten Fluorkohlenwasserstoffen, teilfluorierten Kohlenwasserstoffen und Chlorfluorkohlenwasserstoffen sowie Schwefelhexafluorid und Stickstofftrifluorid. Die Entfernung von anderen Gaskomponenten aus Fluorverbindungsgasströmen erfolgt durch Oxidation unter Kontaktierung eines trockenen Materials (Adsorptionsmittels) oder Wäschermediums.

In einer Ausführungsform wird die Verwendung von alkalischem Wäschermedium (pH > 9) zum effizienteren Waschen von sauren Gasen beschrieben. Außerdem arbeitet dieser Laugenwäscher oberhalb von Atmosphärendruck.

US 4519999 A offenbart eine Abwasserbehandlung bei der Siliciumherstellung. Es sieht ein Verbrennungsverfahren mit Waschen einer Flüssigkeit/eines Gases in einer Hydrolyse-Neutralisations-Zone durch Kontakt mit Wasser und einem darin enthaltenen Alkalimetall vor. Der Wäscher dient hauptsächlich der Rückgewinnung der durch Verbrennen von Abfallströmen bei verschiedenen Temperaturen gebildeten Salzsäure.

US 5246682 A und EP 0 527 309 A1 offenbaren ein Verfahren zur abwasserfreien Aufarbeitung von Rückständen einer Chlorsilandestillation mit Salzsäure. Das Verfahren wird mit Salzsäure unter Freisetzung von Chlorwasserstoff durchgeführt. Ein Teil des Reaktionsgemischs koaguliert und wird durch eine Trocknung und Tempern (∼140 °C) entfernt.

DE 37 09 630 A1 offenbart ein Verfahren zum Reinigen von Chlorsilanen.

GB 994 076 A offenbart ein Verfahren zum Reinigen von Chlosilanen. CN 202 226 742 U offenbart eine Vorrichtung zur Behandlung von chlorsilanhaltigen Abfällen.

US 5660615 A offenbart ein Abgaswaschverfahren, das zwei Schritte umfasst. Zunächst wird eine Waschstufe in einem Temperaturbereich von 30-150 °C durchgeführt. In einem zweiten Schritt wird das Abgas mit einer im Kreislauf geführten wässrigen Salzlösung mit einem pH < 5 in Kontakt gebracht.

US 20040213721 A1 offenbart eine Vorrichtung und ein Verfahren zur Behandlung von Abgasströmen am Verwendungsort. Das Waschverfahren beruht auf einem wässrigen Waschmedium, das ein Reduktionsmittel (Natriumthiosulfat, Ammoniumhydroxid, Kaliumiodid) enthält, und besteht aus mindestens zwei Stufen. In dem Waschsystem können entfernbare Einschubbetten aus mehreren Packungsmaterialien verwendet werden.

US 7611684 B2 und US 5757660 A sowie US 5246594 A offenbaren Wäschersteuersysteme und -verfahren. Sie beruhen auf Messmethoden zum Regeln und Überwachen des pH-Werts und der Konzentration des Waschmittels. Dies erfolgt mittels einem pH-Sensor, Leitfähigkeitsmessungen oder Redoxpotentialmessungen.

Auch US 7204963 B2 offenbart ein aus zwei Schritten bestehendes Verfahren zur Abtrennung von Chlorsilanen aus Gasströmen. Der Abgasstrom wird in einer ersten Stufe in der Gasphase mit Wasserdampf und dann in einer zweiten Stufe mit einer flüssigen, wässrigen Phase behandelt.

US 20110150739 A1 offenbart ein Verfahren zur Entfernung von borhaltigen Verunreinigungen aus Halogensilanen und eine Vorrichtung zur Durchführung des Verfahrens.

US 4408030 A offenbart eine Abfallchlorsilanbehandlung mit einem wässrigen Medium. Das Wäschermedium enthält konzentrierte Salzsäure.

JP 2157020 A offenbart ein Verfahren zur Behandlung von Dichlorsilan enthaltendem Gas mit alkalischen Erdmetallhydroxiden oder -oxiden mit pH 6-8,5.

Der Stand der Technik offenbart keine Verfahren, bei dem Chlorsilane in einem einzigen Schritt und bei Umgebungsbedingungen entfernt werden können, ohne auf Packungsmaterialien zurückgreifen zu müssen. Auch fallen im Stand der Technik oftmals Abfallströme an, die Partikel enthalten.

Aus dieser Problematik ergab sich die Aufgabenstellung der Erfindung.

Die Aufgabe der Erfindung wird gelöst durch ein Verfahren zur Behandlung einer wenigstens ein Chlorsilan enthaltenden Flüssigkeit,
umfassend Verdampfen der Flüssigkeit,
Behandlung der verdampften Flüssigkeit durch Inkontaktbringen mit einem alkalischen Medium in einer Waschkammer, so dass eine Waschflüssigkeit mit pH 9-13 resultiert,
und nachfolgende Behandlung von aus der Waschkammer entnommener Waschflüssigkeit in einer Abwasserbehandlungseinrichtung, wobei eine Säure zugegeben wird, um einen pH 6-9 einzustellen und Feststoffe aus der Waschflüssigkeit mittels einer Zentrifuge abgetrennt werden.

Die Flüssigkeit kann ein Gemisch von Chlorsilanen, Methylchlorsilanen und borhaltigen Halogenidverbindungen sein.

Die Behandlung der Flüssigkeit kann zusammen mit anderen Flüssigkeiten oder Dämpfen, einschließlich HCl- und H₂-Dampf, erfolgen.

Vorzugsweise umfasst der verdampfte Chlorsilane enthaltende Strom H₂.

Vorzugsweise umfasst der verdampfte Chlorsilane enthaltende Strom HCl.

Vorzugsweise werden nach dem Verdampfen jene gasförmigen Abgase hinzugegeben.

Vorzugsweise handelt es sich beim alkalischen Medium um eine wässrige Lösung aus Alkali oder alkalischer Base.

Besonders bevorzugt ist die Verwendung einer wässrigen Lösung von Natriumhydroxid (NaOH).

Beim verwendeten Wasser kann es sich um Oberflächenwasser, entionisiertes oder entsalztes Wasser handeln.

Vorzugsweise stammt das Wasser aus einem umliegenden Wasservorrat.

Vorzugsweise wird eine Waschflüssigkeit bei einem pH-Wert zwischen pH = 9 - 13 gehalten.

Besonders bevorzugt wird die Waschflüssigkeit bei einem pH-Wert zwischen pH = 10 - 12 gehalten.

Vorzugsweise wird der Strom in einer Waschkammer reguliert.

Vorzugsweise wird der pH-Werts in der Waschflüssigkeit reguliert.

Vorzugsweise wird dem Waschflüssigkeitsreservoir alkalisches Medium zugegeben, um den pH-Wert im Wäscher im gewünschten Bereich zu halten.

Das Verfahren sieht eine teilweise Entfernung einer Waschflüssigkeit zur Abwasserbehandlungseinrichtung vor.

Es ist vorzugsweise ein erster Mischtank vorgesehen, wobei der pH-Wert gemessen werden kann, um zu bestimmen, wie viel neutralisierende Säure für den ersten Mischtank erforderlich ist, und an eine Pumpe, die eine neutralisierende Säure abgibt, weitergemeldet werden kann.

Die neutralisierende Säure wird in den ersten Mischtank gegeben und dann abgegeben.

Bei der neutralisierenden Säure handelt es sich vorzugsweise um eine Mineralsäure, besonders bevorzugt um Salzsäure (HCl).

Vorzugsweise wird dem Mischtank ein Flockungsmittel zugegeben.

Vorzugweise beträgt der End-pH-Wert im ersten Mischtank nach Abgabe von Säure 6-9, besonders bevorzugt 6-8, ganz besonders bevorzugt 7-8.

Vorzugsweise wird der pH-Wert gemessen und weitergemeldet, um zu bestimmen, wie viel neutralisierende Säure für den zweiten Mischtank erforderlich ist.

Die neutralisierende Säure wird in den zweiten Mischtank gegeben und abgegeben.

Bei der neutralisierenden Säure handelt es sich vorzugsweise um eine Mineralsäure, besonders bevorzugt um Salzsäure (HCl).

Vorzugsweise wird dem Mischtank ein Flockungsmittel zugegeben.

Vorzugsweise wird eine pH-Wert-Messung im zweiten Mischtank vorgenommen.

Vorzugweise beträgt der End-pH-Wert im zweiten Mischtank nach Abgabe von Säure 6-9, besonders bevorzugt 6-8, ganz besonders bevorzugt 7-8.

Bei der Trennvorrichtung handelt es sich vorzugsweise um eine Zentrifuge.

Vorzugsweise umfasst der Gehalt an teilchenförmigem Material, das entfernt werden kann, ein Volumenverhältnis von 0 - 1,5 % des Zulaufs aus dem zweiten Mischtank.

Vorzugsweise umfasst das ein Entfernen von überschüssigem Wasser aus dem teilchenförmigen Material, ein Füllen der Filterpresse, ein Abfiltrieren der Feststoffe, ein Quetschen der Feststoffe und ein Entfernen des Filterkuchens.

Vorzugsweise ist eine pH-Messvorrichtung hinter der Zentrifuge vorgesehen, die Daten an einen Verteiler weitermeldet.

Vorzugsweise öffnet oder schließt das System in dem Verteiler Ventile, um nicht mehr spezifikationsgerechtes Wasser in einen zweiten Mischtank zurückzuführen.

Die Vorrichtung zur Durchführung des Verfahrens umfasst wenigstens eine Verdampfereinheit zum Verdampfen eines flüssigen Chlorsilane enthaltenden Stroms,
wenigstens eine Waschkammer, um die verdampfte Flüssigkeit mit einem alkalischen Medium in Kontakt zu bringen,
wenigstens eine Abwasserbehandlungseinrichtung;
wobei die Waschkammer wenigstens einen Einlass, um verdampfte Flüssigkeit von der Verdampfereinheit der Wäschekammer zuzuführen, wenigstens eine Düse, mit der alkalisches Medium kontinuierlich in die Waschkammer eingesprüht werden kann, und einen Auslass, um gewaschenes Gas der Abwasserbehandlungseinrichtung zuzuführen, umfasst und
wobei die Abwasserbehandlungseinrichtung eine Zuführeinrichtung für Waschflüssigkeit aus der Waschkammer und eine Zentrifuge zu den Abtrennern von Feststoffen aus der Waschflüssigkeit umfasst.

Vorzugsweise umfasst die Vorrichtung einen Behälter mit einem Wasservorrat.

Vorzugsweise umfasst die Waschkammer wenigstens einen Einlass zur Zugabe von zusätzlichem Wasser (Makeup-Wasser).

Vorzugsweise umfasst die Vorrichtung eine Rückführschleife zur Wiederverwendung von Waschflüssigkeit.

Vorzugsweise umfasst die Vorrichtung einen Behälter, um aus dem Wäscher entfernte Flüssigkeit aufzubewahren.

Vorzugsweise umfasst die Vorrichtung einen ersten Mischtank zur Zugabe einer neutralisierenden Säure.

Vorzugsweise umfasst die Vorrichtung einen zweiten Mischtank zur Zugabe einer neutralisierenden Säure.

Vorzugsweise umfasst die Vorrichtung eine Trennvorrichtung zur Aufnahme des Inhalts eines zweiten Mischtanks.

Vorzugsweise umfasst die Abwasserbehandlungseinrichtung eine Zentrifuge, die geeignet ist, mehrere teilchenförmige Materialien aus dem Zulauf des zweiten Mischtanks zu entfernen.

Vorzugsweise ist eine zusätzliche Vorrichtung zur Aufnahme von aus der Zentrifuge entferntem teilchenförmigem Material vorgesehen.

Vorzugsweise handelt es sich bei jener Vorrichtung um eine Filterpresse. besonders bevorzugt umfasst die Filterpresse mehrere Membranfilter.

Es hat sich gezeigt, dass es durch die Erfindung ermöglicht wird, den Transport von teilchenförmigem Material aus den Wäscher zu verhindern und Emissionen zu vermeiden. Dazu ist die Regelung des pH-Werts im Wäscher auf ca. pH 11 entscheidend.

Bei der Abwasserbehandlung ist vorgesehen, Silikate auszufällen und in einem Zentrifugier- und Filterpressverfahren zu entfernen.

Vorzugsweise betrifft die vorliegende Erfindung die Behandlung von niedrigsiedenden hauptsächlich Chlorsilane enthaltenden flüssigen Verbindungen.

Diese niedrigsiedenden Chlorsilanverbindungen bestehen hauptsächlich aus einer oder mehreren Verbindungen mit Siedepunkten, die kleiner gleich dem Siedepunkt von Monomethyldichlorsilan (CH₄Cl₂Si), T_{b} = 41,5 °C, ist.

In aller Regel sollte der Siedepunkt für Verbindungen in diesem Strom Siedepunkte zwischen Dichlorsilan (H₂Cl₂Si) , T_{b} = 8,3 °C, und Monomethyldichlorsilan (CH₄Cl₂Si), T_{b} = 41,5 °C, umfassen.

Die Zusammensetzungen dieser Chlorsilane enthaltenden Ströme können in der Regel Dichlorsilan (H₂Cl₂Si) , Trichlorsilan (HCl₃Si), Monomethyldichlorsilan (CH₄Cl₂Si) und borhaltige Verbindungen wie Bortrichlorid (BCl₃) enthalten, sind aber nicht darauf beschränkt.

Außerdem ist es möglich, einen gasförmigen Strom mit H₂, HCl und einem kleineren Volumen von Chlorsilanen in den Wäscher einzutragen.

Derartige Ströme kann es beispielsweise auf dem Gebiet der Polysiliciumherstellung geben, insbesondere in Relation zu den Rückständen von Destillationsprodukten niedrig- bis mittelsiedender Verbindungen, oder auf dem Gebiet der Silikonherstellung.

Der Fachmann findet möglicherweise auch eine oder mehrere andere Anwendungen, bei der es derartige Ströme gibt und das erfindungsgemäße Verfahren und die Vorrichtung von Nutzen sein können. Die Ausführungsbeispiele der Erfindung dienen nur der Veranschaulichung und sollen nicht als Einschränkung auf eine spezifische Anwendung verstanden werden.

Vorteilhaft an der vorliegenden Erfindung ist, dass ein weitgehend teilchenfreier Strom im Wäscher erhalten wird. In der Waschkammer kann jede Art von Wasser verwendet werden. Die Bildung unlöslicher Erdalkalisilikate wird so weit wie möglich vermieden.

Das Verfahren kommt ohne jegliche Verbrennung von Prozessströmen aus.

Es erfolgt eine Behandlung mit einem alkalischen Medium. Die Behandlung erfolgt in der Gasphase und bei Umgebungstemperaturen.

Das Waschverfahren an sich umfasst nur einen Schritt, was gegenüber dem Stand der Technik eine Vereinfachung bedeutet.

Es ist kein Packungsmaterial erforderlich. Der Einsatz eines zusätzlichen Reduktionsmittels ist nicht erforderlich.

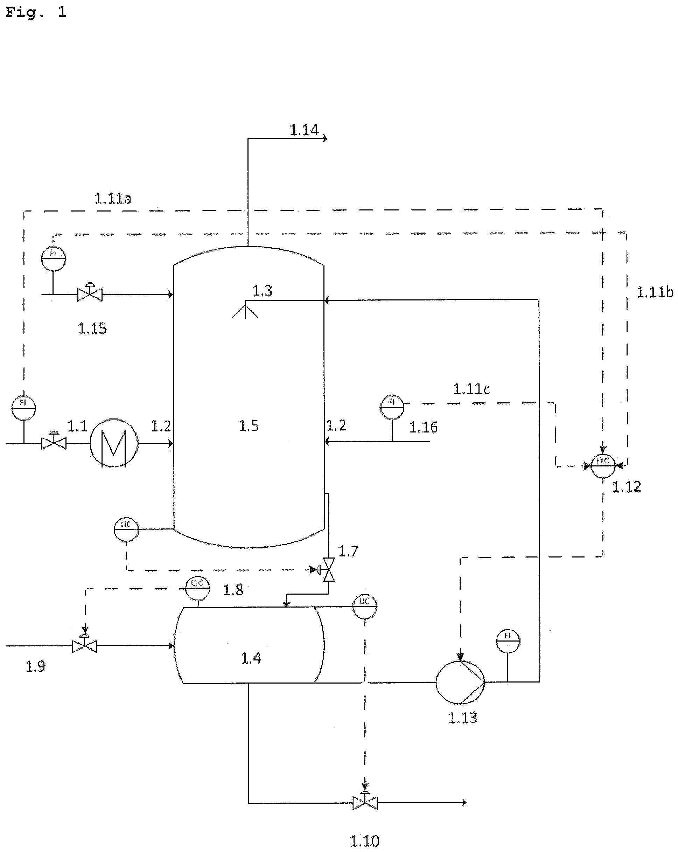

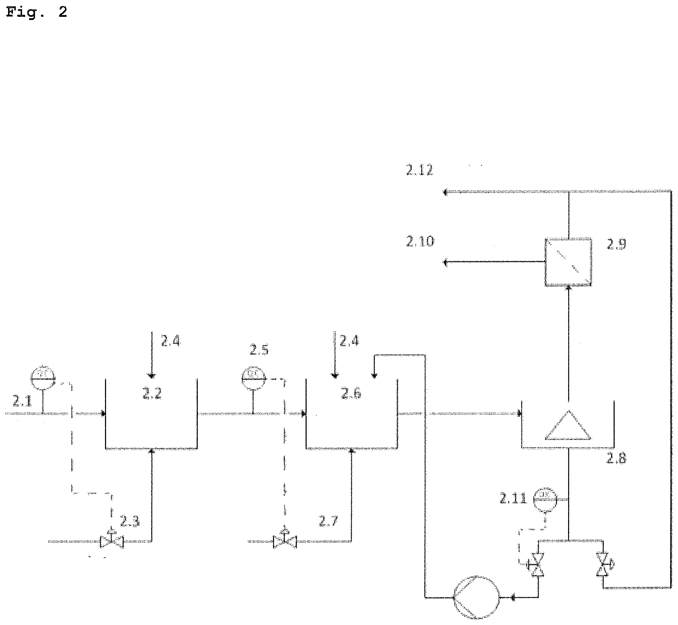

Das Verfahren und die Vorrichtung werden nachfolgend anhand von **Fig. 1** und **2** erläutert.
**Fig. 1** zeigt schematisch ein Waschsystem.
**Fig. 2** zeigt schematisch ein Abwasserbehandlungssystem.

### Liste der verwendeten Bezugszeichen

- **1.1**: Verdampfungswärmetauscher
- **1.2**: Wäschereinlass
- **1.3**: Düse
- **1.4**: Waschflüssigkeitsreservoir
- **1.5**: Waschkammer
- **1.7**: Pumpsystem
- **1.8**: pH-Messung
- **1.9**: Laugenzufuhr
- **1.10**: Zuführung Abwasserbehandlung
- **1.11 a-c**: Messungen
- **1.12**: Steuervorrichtung
- **1.13**: Pumpe
- **1.14**: Auslass
- **1.15**: Wasserzufuhr
- **1.16**: Zuführeinrichtung gasförmiger Strom

- **2.1**: PH-Messung 1
- **2.2**: Mischtank 1
- **2.3**: Zuführung neutralisierende Säure
- **2.4**: Zugabe Flockungsmittel
- **2.5**: pH-Messung 2
- **2.6**: Mischtank 2
- **2.7**: Zuführung neutralisierende Säure
- **2.8**: Zentrifuge
- **2.9**: Filterpresseneinheit
- **2.10**: Feststoffabfallstation
- **2.11**: pH-Messung
- **2.12**: Auslass

Es wird ein hauptsächlich Flüssigkeiten enthaltender Chlorsilanstrom mit Hilfe eines Verdampfungswärmetauschers **1.1** verdampft.

Außerdem ist es möglich, mittels einer Zuführeinrichtung **1.16** einen gasförmigen Strom mit H₂, HCl und einem kleineren Volumen von Chlorsilanen in den Wäscher einzutragen.

Der verdampfte Strom wird über den Wäschereinlass **1.2** zusammen mit beliebigen anderen verdampften/gasförmigen Strömen, die zu waschen sind, eingetragen.

Im Wäscher wird eine alkalische Lösung, die im Folgenden als Waschflüssigkeit bezeichnet wird und aus einer beliebigen alkalischen Base und Wasser bestehen kann, aus Wäscherdüsen **1.3** versprüht.

Vorzugsweise handelt es sich bei der Base um Natriumhydroxid (NaOH).

Wasser für die Waschflüssigkeit kann Oberflächenwasser, entionisiertes oder entsalztes Wasser sein oder wird direkt aus einem umliegenden Gewässer kommen und wird über Wasserzufuhr **1.15** eingebracht.

Die Waschflüssigkeit ist in einem Waschflüssigkeitsreservoir enthalten
Das Waschflüssigkeitsreservoir 1.4 kann entweder eine unabhängige Apparatur sein oder in der Waschkammer enthalten sein.

Die Waschflüssigkeit wird in der Waschkammer 1.5 mit dem ankommenden Gasstrom in Berührung gebracht.

Diese Waschflüssigkeit hat vorzugsweise einen messbaren pH-Bereich von 10-12, insbesondere bei Verwendung von Wasser mit einem hohen Gehalt an zweiwertigen Mineralstoffen.

Infolge dieses pH-Bereichs gibt es mindestens zwei Schlüsselvorteile.

Das durch dieses Waschverfahren gebildete Produkt, hauptsächlich Silikate, ist in der Waschflüssigkeit bei erhöhtem pH löslich, und in dem System kann Wasser mit höherem Mineralgehalt verwendet werden. Bei niedrigerem pH sind in dem Gasstrom (Kieselsäure-) Teilchen anzutreffen, wodurch die Wascheffizienz verringert wird.

Des Weiteren wird durch die schwerlösliche Kieselsäure der Handhabungsaufwand stromabwärts des Wäschers erhöht. Das Wäschersystem wird unter Umgebungstemperaturbedingungen betrieben.

Das System besteht aus einem Mittel zur Regulierung des Niveaus in der Waschkammer **1.5.**

In einer Ausführungsform besteht das System aus mindestens einer oder mehreren Steuereinrichtungen, die das Niveau des Wäschers zurückmelden, um Überläufe zu verhindern, und kann auf ein oder mehrere Ventile einwirken, um beliebige ankommende Ströme zu verlangsamen oder abzusperren.

In einer anderen Ausführungsform kann das System aus einer Methode zur Entfernung von Überlauf durch ein dauernd geöffnetes Ventil bestehen.

Das System umfasst vorzugsweise eine Entfernung und eine Rückführung von verbrauchter Waschflüssigkeit im System, mittels eines Absaugventils und eines Pumpsystems 1.7.

Da gewaschene Chlorsilanströme HCl enthalten, nimmt der pH-Wert der Waschflüssigkeit und somit die Effektivität der Waschflüssigkeit mit der Zeit ab.

Wenn der pH-Wert unter einem bestimmten Schwellenwert liegt, fällt das Produkt aus. Dies kann ein Problem sein, das entweder die Abgabe von (Kieselsäure-) Teilchen in die Atmosphäre oder zusätzliche Feststoffhandhabungseinrichtungen stromabwärts des Wäschers notwendig macht.

Daher wird vor dem Wiedereintragen in den Wäscher ein pH-Wert in einem Waschflüssigkeitsreservoir 1.4 gemessen, mittels pH-Messung 1.8.

Dieser pH-Wert wird mit dem Referenz-pH-Wert verglichen, und es wird über Laugenzufuhr 1.9 eine entsprechende Menge an Makeup-Lauge in das Waschflüssigkeitsreservoir 1.4 gegeben.

Eine festgelegte Menge an Waschflüssigkeit wird aus dem Waschreservoir entnommen und über Zuführung Abwasserbehandlung 1.10 der Abwasserbehandlungseinrichtung, **vgl**. **Fig. 2****,** zugeführt.

In einer Ausführungsform der vorliegenden Erfindung kann die zuzusetzende Menge an Waschflüssigkeit durch Messen der ankommenden Ströme und Zusammensetzungen berechnet werden (1.11 a,b,c).

Diese Messung ist jedoch nicht für alle Ausführungsformen der vorliegenden Erfindung erforderlich.

Diese Berechnung kann an eine Steuervorrichtung 1.12 weitergemeldet werden, die entweder auf eine einstufige Pumpe oder eine verstellbare Pumpe 1.13 einwirkt, um die Strömungsrate von in den Wäscher eintretender Waschflüssigkeit festzulegen.

Gewaschenes Gas wird über Auslass 1.14 entfernt.

Die Waschflüssigkeit, die entweder periodisch oder kontinuierlich entfernt wird, enthält einen erhöhten Hydrolysatproduktgehalt und ist stark basisch.

Der pH-Wert dieses ankommenden Stroms wird stromaufwärts eines ersten Mischtanks 2.2 gemessen, mittels pH-Messung 2.1.

Auf der Basis des pH-Werts des ankommenden Stroms wird ein Signal zu einer Zuführeinrichtung 2.3 für neutralisierende Säure geschickt, um die Lösung bis zu einem pH-Bereich von vorzugsweise 6-9, weiter bevorzugt 7-9 und ganz besonders bevorzugt 7-8 zu neutralisieren.

In einer Ausführungsform kann Flockungsmittel 2.4 zur Ausfällung von Teilchen zugegeben werden.

Nach Entfernung aus dem ersten Mischtank wird mittels pH-Messung 2.5 der pH-Wert stromaufwärts eines zweiten Mischtanks 2.6 erneut gemessen.

Auf der Basis des pH-Werts des ankommenden Stroms wird ein Signal zu einer Zuführeinrichtung für neutralisierende Säure 2.7 geschickt, um die Lösung bis zu einem pH-Bereich von vorzugsweise 6-9, weiter bevorzugt 7-9 und ganz besonders bevorzugt 7-8 zu neutralisieren.

Die nun neutralisierte Waschflüssigkeit wird einer Zentrifuge 2.8 zugeführt.

Da die Lösung nun einen niedrigeren pH-Wert enthält, sind die Feststoffgehalte viel weniger wasserlöslich, und es bildet sich eine metastabile Aufschlämmung, wodurch die Feststoffe leichter durch Zentrifugation entfernt werden können.

Durch diese Neutralisation mit anschließendem Zentrifugationsschritt kann die vorliegende Erfindung eine erheblich größere Kapazität aufweisen als andere Systeme, wie in den folgenden Beispielen gezeigt wird.

Die Feststoffe aus der Zentrifuge 2.8 werden entfernt und einer Filterpresseneinheit 2.9 zugeführt.

Feststoffe werden entfernt und gegebenenfalls in der Feststoffabfallstation 2.10 behandelt.

Die Flüssigkeit wird erneut auf ihren pH-Wert geprüft, mittels pH-Messung 2.11.

Wenn immer noch ein zu hoher pH-Wert gefunden wird, kann diese Flüssigkeit zum zweiten Mischtank 2.6 zurückgeführt werden.

Flüssigkeit aus der Filterpresse 2.9 wird zu dem Flüssigkeitsstrom aus der Zentrifuge 2.8 ergeben und über Auslass 2.12 aus dem System entfernt.

### Beispiele

Ein dem Waschsystem zugeführter typischer hauptsächlich Chlorsilane enthaltender Strom kann eine erhebliche Variation bezüglich der Chlorsilanbeladung aufweisen. Daher wäre eine robuste Abwasserbehandlung wünschenswert, durch die eine sehr große Palette von Teilchenbeladungen entfernt werden kann.

Als Beispiele für die Tauglichkeit der hierin beschriebenen Abwasserbehandlungseinrichtung werden drei verschiedene Abwasserszenarien vorgestellt, die in **Tabelle 1** zu finden sind.

Diese Szenarien entsprechen einer niedrigen Beladung (Minimum), einer mittleren Beladung (Mittel) und einer hohen Beladung (Maximum), die der in **Fig. 2** dargestellten Zentrifuge **2.8** zugeführt werden.

Die Fähigkeit dieses Systems zur Bewältigung einer großen Kapazität auf der Basis des Verhältnisses zwischen den Gehalten in Konzentrat und Einsatzstoff wird vorgestellt.

Zur Beschreibung der Effizienz dieser Vorrichtung wird ein Konzentrationsfaktor als der im Austragsstrom anzutreffende Gehalt der Komponente auf Volumenbasis dividiert durch den im Einsatzstoff anzutreffenden Gehalt der Komponente definiert.

Im Minimum-Fall hat der Feststoffgehalt im Austragsstrom einen Konzentrationsfaktor von 38,5.

Im Mittel-Fall beträgt der Konzentrationsfaktor 31,3.

Im Maximum-Fall beträgt der Konzentrationsfaktor 39,1.

Das Sediment im Konzentrat wies entsprechende Konzentrationsfaktoren von 40, 33,9 bzw. 34,3 für Minimum, Mittel und Maximum auf. Diese Konzentrationsfaktoren wurden unter **Verwendung** anderer üblicher Sedimentationstechniken wie Klärvorrichtungen nicht erhalten.

Daher hat dieses System eine breite Palette von Einsatzstoffbedingungen, für die es ein ähnliches Austragsstromverhalten produzieren kann.

In allen Fällen liegen die für alle Fälle vorgenommenen Trübheitsmessungen deutlich innerhalb der gegenwärtig festgesetzten EPA Grenzen, 250 NTU.

**Tabelle 1: Feststoffentfernung durch Zentrifugation**

| | Minimum | Mittel | Maximum |
|---|---|---|---|
| Feststoffgehalt im Einsatzstoff | 0,2 g/L | 0,78 g/L | 1,78 g/L |
| Sediment im Einsatzstoff | 0,05 Vol.-% | 0,56 Vol.-% | 1,75 Vol.-% |
| Feststoffgehalt im | 0,0 g/L | 0,09 g/L | 1,27 g/L |
| Überlauf | | | |
| Trübheit im Überlauf | 2 NTU | 21 NTU | 109 NTU |
| Feststoffgehalt im Konzentrat | 7,7 g/L | 24,4 g/L | 49,7 g/L |
| Sediment im Konzentrat | 2 Vol.-% | 19 Vol.-% | 60 Vol.-% |

Nach der Zentrifugation werden Feststoffe der Filtrationspresse, Komponente 2.9 in Figur 2, zugeführt.

Wiederum sind Ergebnisse für drei Konzentration, die recht nahe an dem oben erwähnten Minimum, Mittel und Maximum liegen, dargestellt.

Wiederum kann die Feststoffkonzentration beurteilt werden.

Im Minimum-Szenario ergibt sich ein Konzentrationsfaktor von 110,5/m.

Im Mittel-Szenario ergibt sich ein Konzentrationsfaktor von 57,2/m.

Im Maximum-Szenario ergibt sich schließlich ein Konzentrationsfaktor von 48,8/m.

Der erhöhte Konzentrationsfaktor für das Minimum-Szenario kann sowohl als zusätzliche Zeit für Filtrationen als auch als weniger Filterverstopfung beurteilt werden.

**Tabelle 2: Feststoffentfernung in der Filterpresse**

| Test | Minimum | Mittel | Maximum |
|---|---|---|---|
| Aufschlämmungskonzentration | 6,1 g/L | 18,4 g/L | 43,8 g/L |
| Kuchenhöhe | 12 mm | 18 mm | 25 mm |
| Feststoffe im Kuchen nach Filtration | 232 kg/m³ | 166 kg/m³ | 205 kg/m³ |
| Aufschlämmungsbeladung | 0,348 | 0,153 | 0,092 |

| | m³/m² | m³/m² | m³/m² |
|---|---|---|---|
| Feststoffbeladung | 2,1 kg/m² | 2,9 kg/m² | 4,2 kg/m² |
| Filtrationszeit | 2,5 h | 0,9 h | 1,2 h |
| Zeit einschließlich Quetschen | 2,7 h | 1,1 h | 1,4 h |
| Feuchte | 67,4 % | 71,3 % | 70 % |
| Trockensubstanz | 32,6 % | 28,7 % | 30 % |

## Patentansprüche

1. Verfahren zur Behandlung einer wenigstens ein Chlorsilan enthaltenden Flüssigkeit, umfassend Verdampfen der Flüssigkeit, Behandlung der verdampften Flüssigkeit durch Inkontaktbringen mit einem alkalischen Medium in einer Waschkammer, so dass eine Waschflüssigkeit mit pH 9-13 resultiert, und nachfolgende Behandlung von aus der Waschkammer entnommener Waschflüssigkeit in einer Abwasserbehandlungseinrichtung, wobei eine Säure zugegeben wird, um einen pH 6-9 einzustellen und Feststoffe aus der Waschflüssigkeit mittels einer Zentrifuge abgetrennt werden.

2. Verfahren nach Anspruch 1, wonach es sich beim alkalischen medium um eine wässrige Lösung von Natriumhydroxid (NaOH) handelt.

3. Verfahren nach Anspruch 1 oder nach Anspruch 2, wobei die Waschflüssigkeit während der Behandlung in der Waschkammer durch Zugabe von alkalischem Medium bei einem pH 9-13 gehalten wird.

4. Verfahren nach einem der Ansprüche 1 bis 3, wobei in der Abwasserbehandlungseinrichtung eine Mineralsäure, vorzugsweise HCl, zugegeben wird.

5. Verfahren nach einem der Ansprüche 1 bis 4, wobei mittel der Zentrifuge abgetrennte Feststoffe in ein Aufnahmeelement, vorzugsweise eine Filterpresse, aufgenommen werden.

6. Vorrichtung zur Durchführung des Verfahrens nach den Ansprüchen 1 bis 5, umfassend
- wenigstens eine Verdampfereinheit zum Verdampfen eines flüssigen Chlorsilane enthaltenden Stroms;
- wenigstens eine Waschkammer, um die verdampfte Flüssigkeit mit einem alkalischen Medium in Kontakt zu bringen;
- wenigstens eine Abwasserbehandlungseinrichtung;
wobei die Waschkammer wenigstens einen Einlass, um verdampfte Flüssigkeit von der Verdampfereinheit der Wäschekammer zuzuführen, wenigstens eine Düse, mit der alkalisches Medium kontinuierlich in die Waschkammer eingesprüht werden kann, und einen Auslass, um gewaschenes Gas der Abwasserbehandlungseinrichtung zuzuführen, umfasst und wobei die Abwasserbehandlungseinrichtung eine Zuführeinrichtung für Waschflüssigkeit aus der Waschkammer, eine Zuführeinrichtung für neutralisierende Säure und eine Zentrifuge zum Abtrennern von Feststoffen aus der Waschflüssigkeit umfasst.

7. Vorrichtung nach Anspruch 6, wobei die Abwasserbehandlungseinrichtung einen Mischtank zur Bestimmung des pH-Werts von Waschflüssigkeit und eine Pumpe für Säurezufuhr umfasst.

8. Vorrichtung nach Anspruch 6 oder nach Anspruch 7, wonach ein Aufnahmeelement, vorzugsweise eine Filterpresse, vorgesehen ist, um die mittels Zentrifuge abgetrennten Feststoffe aufzunehmen.

## Claims

1. Process for treating a liquid containing at least one chlorosilane, which comprises vaporization of the liquid, treatment of the vaporized liquid by contact with an alkaline medium in a scrubbing chamber so as to give a scrubbing liquid having a pH of 9-13, and subsequent treatment of scrubbing liquid taken off from the scrubbing chamber in a wastewater treatment apparatus, wherein an acid is added in order to set a pH of 6-9 and solids are separated off from the scrubbing liquid by means of a centrifuge.

2. Process according to Claim 1, wherein the alkaline medium is an aqueous solution of sodium hydroxide (NaOH).

3. Process according to Claim 1 or in Claim 2, wherein the scrubbing liquid is maintained at a pH of 9-13 by addition of alkaline medium during the treatment in the scrubbing chamber.

4. Process according to any of Claims 1 to 3, wherein a mineral acid, preferably HCl, is added in the wastewater treatment apparatus.

5. Process according to any of Claims 1 to 4, wherein solids separated off by means of the centrifuge are taken up in an uptake element, preferably a filter press.

6. Apparatus for carrying out the process according to any of Claims 1 to 5, which comprises
- at least one vaporizer unit for vaporizing a liquid chlorosilane-containing stream;
- at least one scrubbing chamber in order to bring the vaporized liquid into contact with an alkaline medium;
- at least one wastewater treatment apparatus;
wherein the scrubbing chamber comprises at least one inlet in order to feed vaporized liquid from the vaporizer unit to the scrubbing chamber, at least one nozzle by means of which alkaline medium can be sprayed continuously into the scrubbing chamber and an outlet in order to feed scrubbed gas to the wastewater treatment apparatus and the wastewater treatment apparatus comprises a feed device for scrubbing liquid from the scrubbing chamber, a feed facility for neutralizing acid and a centrifuge for separating solids from the scrubbing liquid.

7. Apparatus according to Claim 6, wherein the wastewater treatment apparatus comprises a mixing tank for determining the pH of scrubbing liquid and a pump for feeding in acid.

8. Apparatus according to Claim 6 or in Claim 7, wherein an uptake element, preferably a filter press, is provided in order to take up the solids separated off by means of the centrifuge.

## Revendications

1. Procédé pour le traitement d'un liquide contenant au moins un chlorosilane, comprenant la vaporisation du liquide, le traitement du liquide vaporisé, par mise en contact avec un milieu alcalin dans une chambre de lavage, de sorte qu'il en résulte un liquide de lavage à pH 9-13, et traitement subséquent du liquide de lavage, retiré de la chambre de lavage, dans un dispositif de traitement d'eau résiduaire, procédé dans lequel on ajoute un acide pour ajuster un pH de 6-9 et on sépare les matières solides du liquide de lavage au moyen d'une centrifugeuse.

2. Procédé selon la revendication 1, selon lequel pour ce qui est du milieu alcalin il s'agit d'une solution aqueuse d'hydroxyde de sodium (NaOH).

3. Procédé selon la revendication 1 ou la revendication 2, dans lequel pendant le traitement dans la chambre de lavage on maintient le liquide de lavage à un pH de 9-13 par addition de milieu alcalin.

4. Procédé selon l'une quelconque des revendications 1 à 3, dans lequel on introduit dans le dispositif de traitement d'eau résiduaire un acide minéral, de préférence HCl.

5. Procédé selon l'une quelconque des revendications 1 à 4, dans lequel les matières solides séparées au moyen de la centrifugeuse sont collectées dans un élément collecteur, de préférence un filtre-presse.

6. Appareillage pour la mise en oeuvre du procédé selon les revendications 1 à 5, comprenant
- au moins une unité de vaporisation pour la vaporisation d'un courant liquide contenant des chlorosilanes ;
- au moins une chambre de lavage, pour la mise en contact du liquide vaporisé avec un milieu alcalin ;
- au moins un dispositif de traitement d'eau résiduaire ;
dans lequel la chambre de lavage comprend au moins une entrée, pour l'acheminement du liquide vaporisé de l'unité de vaporisation à la chambre de lavage, au moins une buse, par laquelle le milieu alcalin peut être pulvérisé en continu dans la chambre de lavage, et une sortie, pour l'envoi du gaz lavé au dispositif de traitement d'eau résiduaire, et dans lequel le dispositif de traitement d'eau résiduaire comprend un dispositif d'acheminement pour le liquide de lavage à partir de la chambre de lavage, un dispositif d'acheminement pour l'acide neutralisant et une centrifugeuse pour la séparation de matières solides d'avec le liquide de lavage.

7. Appareillage selon la revendication 6, dans lequel le dispositif de traitement d'eau résiduaire comprend une cuve de mélange pour la détermination du pH du liquide de lavage et une pompe pour l'alimentation en acide.

8. Appareillage selon la revendication 6 ou la revendication 7, selon lequel un élément collecteur, de préférence un filtre-presse, est prévu pour collecter les matières solides séparées au moyen d'une centrifugeuse.
